(19) Europäisches Patentamt / European Patent Office / Office européen des brevets

(11) **EP 3 845 820 A1**

(12) # EUROPEAN PATENT APPLICATION

(43) Date of publication:
**07.07.2021 Bulletin 2021/27**

(51) Int Cl.:
**F24F 3/16** *(2021.01)*  **F24F 11/77** *(2018.01)*
**F24F 110/65** *(2018.01)*

(21) Application number: **20153994.7**

(22) Date of filing: **28.01.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(30) Priority: **30.12.2019  PCT/CN2019/130003**

(71) Applicant: **Koninklijke Philips N.V.
5656 AG Eindhoven (NL)**

(72) Inventors:
• **CAO, Xueming
  5656 AE Eindhoven (NL)**
• **KELLY, Declan Patrick
  5656 AE Eindhoven (NL)**
• **VERSCHUEREN, Alwin Rogier Martijn
  5656 AE Eindhoven (NL)**

(74) Representative: **Philips Intellectual Property &
Standards
High Tech Campus 5
5656 AE Eindhoven (NL)**

(54) ## AIR PURIFIER AND METHOD FOR OPERATING THE SAME

(57)  Embodiments of the present disclosure relate to air purifier and method for operating the same. A method of operating an air purifier in a room includes determining (102) a volume of the room; determining (104) a releasing speed of a pollutant in the room based on the volume of the room; obtaining (106) a target concentration of the pollutant in the room; and determining (108) a wind speed to operate the air purifier based on the releasing speed and the target concentration of the pollutant.

FIG. 1

EP 3 845 820 A1

**Description**

FIELD OF THE INVENTION

Embodiments of the present disclosure relate to an air purifier and a method for operating the air purifier.

BACKGROUND OF THE INVENTION

Since a person will spend almost 80% of his/her lifetime in door, including sleep during night, people are paying more and more attention on the indoor air quality. It is very important to monitor the harmful gas concentration, like volatile organic compound (VOC) and formaldehyde, and to remove the harmful gas. Generally, the harmful gas releases slowly at a relative constant speed at home. Some accident may induce a fast increase of formaldehyde or VOC. The accident could be a brought in of new furniture or the like from outside, cooking, cleaning and drinking alcohol. Such accidents happen for a short period and generally at daytime.

Most of the time, air purifiers are operated at auto mode in the daytime and sleeping mode in the night with a pre-set slow wind speed. At the auto mode, the turbo mode can be triggered only when the formaldehyde/VOC concentration is above a threshold. Air purifier can remove harmful gases very quickly at turbo mode and normally turbo mode is very noisy and power consuming. Since no accident happens in the night when everyone is sleep, the turbo mode may not be triggered at the sleeping mode to prevent disturbing customers' sleep.

At auto mode, customers expect that the pollutant level indoor could be maintained at a constantly low level, and turbo mode is triggered only for accidents such as bringing in new furniture or other sources. However, this is not the case.

The purification at auto mode is slower than the releasing speed of formaldehyde or VOC. The air pollution indoor will increase gradually and customers have to breath in those harmful gases during its increase for a while. The pollutants are only reduced when the pollutant concentration is larger than the criterion for triggering turbo mode.

Customers will hear a regular large noise because the turbo mode is triggered regularly. This is especially annoying during night. On the other hand, the outlet wind speed in the turbo mode removes the pollutants much faster than the releasing speed of formaldehyde or VOC. Then it is a waste to use this outlet wind speed and it induces unnecessary noise.

Because air purifiers' outlet wind speed at auto mode is fixed by purifier manufacture, the above problems cannot be solved since different customers have different situations.

Accordingly, there is a need for a solution to improve the air purifier and its operation.

SUMMARY OF THE INVENTION

In general, example embodiments of the present disclosure provide an air purifier and a method for operating an air purifier.

In a first aspect, there is provided a method of operating an air purifier in a room comprising: determining a volume of the room; determining a releasing speed of a pollutant in the room based on the volume of the room; obtaining a target concentration of the pollutant in the room; and determining a wind speed to operate the air purifier based on the releasing speed and the target concentration of the pollutant.

In a second aspect, there is provided an air purifier. The air purifier includes a controller configured to perform the method according to the first aspect and a fan coupled to the controller and configured to output an air flow at the wind speed.

In a third aspect, there is provided a computer program product stored on a computer storage medium and comprising machine-executable instructions, the machine-executable instructions, when executed by a device, causing the device to perform the method according to the first aspect.

In a fourth aspect, there is provided an electronic device. The electronic device includes a processor coupled to the processor and storing instructions thereon, the instructions, when executed by the processor, performing the method according to the first aspect.

It is to be understood that the summary section is not intended to identify key or essential features of embodiments of the present disclosure, nor is it intended to be used to limit the scope of the present disclosure. Other features of the present disclosure will become easily comprehensible through the following description.

BRIEF DESCRIPTION OF THE DRAWINGS

Through the more detailed description of some embodiments of the present disclosure in the accompanying drawings, the above and other objects, features and advantages of the present disclosure will become more apparent, wherein:

FIG. 1 is a block diagram illustrating an air purifier in accordance with an embodiment of the present disclosure;
FIG. 2 is a flowchart illustrating a method for operating an air purifier in accordance with an embodiment of the present disclosure;
FIG. 3 is a block diagram illustrating an air purifier in accordance with another embodiment of the present disclosure; and
FIG. 4 is a block diagram illustrating an air purifier system in accordance with another embodiment of the present disclosure.

Throughout the drawings, the same or similar reference numerals represent the same or similar element.

DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitations as to the scope of the disclosure. The disclosure described herein can be implemented in various manners other than the ones describe below.

As used herein, the term "includes" and its variants are to be read as open terms that mean "includes, but is not limited to." The term "based on" is to be read as "based at least in part on." The term "one embodiment" and "an embodiment" are to be read as "at least one embodiment." The term "another embodiment" is to be read as "at least one other embodiment." Other definitions, explicit and implicit, may be included below.

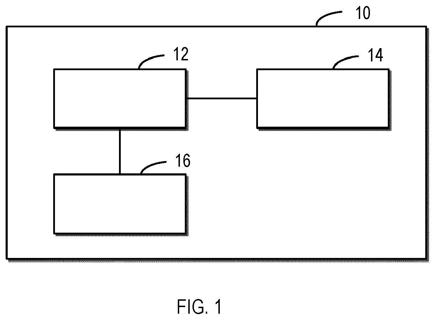

FIG. 1 is a block diagram illustrating an air purifier 10 in accordance with an embodiment of the present disclosure. The air purifier 10, also referred to as an air cleaner, is a device which removes contaminants from the air in a room to improve indoor air quality.

For example, the air purifier 10 may include a fan 16 configured to create an air flow at a specified wind speed. As an example, the fan 16 may include a rotating arrangement of vanes or blades which act on the air. The fan 16 may be powered by electric motors, but other sources of power may be used, including hydraulic motors, for example. As another example, the fan 16 may be implemented by an air multiplier, also called bladeless fan, which blows air from a ring with no external blades.

As shown in FIG. 1, the air purifier 10 may include a detector 14, also referred to as a pollutant sensor. The detector 14 is configured to detect or monitor a concentration of at least one harmful gas in a room. For example, the harmful gas may include formaldehyde, volatile organic compound (VOC), benzene, nitrogen dioxide, nitric oxide, acetaldehyde, sulphur dioxide, dichlorobenzene, acetone, acetic acid, and/or the like.

Additionally, the air purifier 10 can include a controller 12 coupled to the fan 16 to control operation of the fan 16. For example, the controller 12 can send a command to the fan 16, the command specifying the wind speed generated by the fan 16. The controller 12 is also coupled to the detector 14 and configured to receive the concentration of the harmful gas detected by the detect 14. The controller 12 is configured to determine the wind speed of the fan 16 based on the concentration of the harmful gas and then send a command indicating the wind speed to the fan 16.

The controller 12 can be implemented in hardware or special purpose circuits, software, logic or any combination thereof. In an embodiment, the controller 12 can include a Central Processing Unit (CPU) configured to determine the pollution increasing speed and optimal outlet wind speed for various situations. The CPU can communicate with pollutant detector or sensor and receive information from customers and so on. The controller 12 may also include a wind speed controller configured to send the current outlet wind speed to the CPU, and receive the outlet wind speed from the CPU. The wind speed controller can control the wind speed based on the calculation from the CPU.

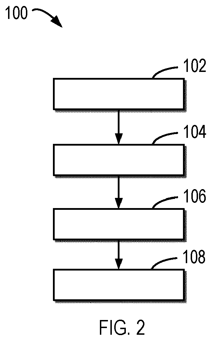

FIG. 2 is a flowchart illustrating a method 100 for operating an air purifier 10 in a room in accordance with an embodiment of the present disclosure. For example, the method 100 can be implemented by the controller 12 of the air purifier 10.

At block 102, the controller 12 can determine a volume of the room. For example, the air purifier 10 may be operated at a first wind speed for a first period of time to decrease a concentration of the harmful gas. For example, the first wind speed may be a maximum outlet wind speed of the air purifier 10 in order to reduce the pollutant concentration. The volume of the room may be determined based on a rate of decrease in the concentration of the harmful gas, the first wind speed, and the first period of time. For example, the volume $V$ of the room may be calculated by

$$V = \frac{O_{max}T_1}{\ln(\frac{C_1}{C_0})}$$ (1),

where $O_{max}$ represents the first wind speed, $T_1$ represents the first period of time, $C_0$ represents the concentration of the pollutant at the start of the first period, $C_1$ represents the concentration of the pollutant at the end of the first period, and $C_1/C_0$ represents the rate of decrease in the concentration of the harmful gas.

In some embodiments, the concentration $C_0$ may be chosen at the value which air purifier just finishes turbo mode operation and the concentration $C_1$ may be the criterion which trigger turbo mode. For example, both the concentrations $C_0$ and $C_1$ could be obtained by averaging over a predefined period of time (for example, 20 minutes) in order to avoid effects from accidents like brought-in new furniture and open windows. For example, when the pollutant concentration increases to $C_1$, the air purifier 10 triggers its turbo mode with maximum outlet wind speed Omax.

At block 104, the controller 12 can determine a releasing speed of a harmful gas in the room. For example, the releasing speed of the harmful gas can be determined based on the volume of the room. For example, the releasing speed can be the actual releasing speed in this room, taking into account of the effect of the air exchange between indoor and outdoor.

In an embodiment, the air purifier is operated at a second wind speed for a second period of time, such that a concentration of the harmful gas is increased from a first concentration to a second concentration. The releasing speed of the harmful gas may be then determined based on the volume of the room, the first concentration, the second concentration, the second wind speed, and the second period of time.

For example, the releasing speed RS of the harmful gas may be determined by

$$RS = \frac{C_1 \cdot O_1 - C_0 \cdot O_1 \cdot e^{-\frac{O_1}{V} \cdot T_0}}{1 - e^{-\frac{O_1}{V} \cdot T_0}} \qquad (2),$$

where V represents the volume of the room, Co represents the first concentration, $C_1$ represents the second concentration, $O_1$ represents the second wind speed, and To represents the second period of time.

The air purifier may work at an initial outlet wind speed $O_1$, which may be the default value from its manufacture (if it is turned on the first time at this room, for example) or from the previous calculation (if the room information needs to be updated, for example). After a second period of time To, for example, 4 hours, the sensor on the purifier found that the pollutant concentration increase from $C_0$ to $C_1$ ($C_1 > C_0$). The process can be used to calculate the releasing speed as a function of the volume of the room based on equation (2).

Alternatively, the fan 16 of the air purifier 10 may be stopped from running for a third period of time, such that a concentration of the harmful gas is increased from a first concentration to a second concentration. The releasing speed of the harmful gas may be then determined based on the volume of the room, the first concentration, the second concentration, and the second period of time.

For example, the releasing speed RS of the harmful gas may be calculated by

$$RS = \frac{V}{T_0}(C_1 - C_0) \qquad (3),$$

where V represents the volume of the room, $C_0$ represents the first concentration, $C_1$ represents the second concentration, and $T_0$ represents the second period of time.

At block 106, the controller 12 can obtain a target concentration of the harmful gas in the room. For example, the target concentration may be predefined in the air purifier 10 and may be input by the user or operator of the air purifier 10.

At block 108, the controller 12 can determine a wind speed to operate the air purifier based on the releasing speed and the target concentration of the harmful gas.

For example, the wind speed Ooptimal may be determined by dividing the releasing speed RS by the target concentration Ctarget of the harmful gas:

$$O_{optimal} = \frac{RS}{C_{target}} \qquad (4).$$

If the wind speed Ooptimal is obtained, the air purifier 10 can keep using this speed for a while. If it is determined that a change of concentration of the harmful gas exceeds a threshold, the controller 12 can modify the releasing speed of the harmful gas in the room or trigger a new calculation of the releasing speed of the harmful gas in the room. For example, calculation of the new wind speed Ooptimal may be triggered when an increase of harmful gas concentration is found, which may mean that a new source is brought inside the room. The calculation of new wind speed Ooptimal may also be triggered when an obvious decrease of harmful gas concentration is found, which may mean some source is removed from the room.

For example, the controller 12 can modify or calculate the releasing speed of the harmful gas by a process similar to block 104. The controller 12 can adapt the wind speed of the air purifier based on the modified releasing speed of the harmful gas and the target concentration.

A calculation of the new wind speed Ooptimal may also be triggered after a preset period since the last calculation. The preset period can be several months. This is for the situations like formaldehyde releasing speed changes, or some gas releasing source be changed, or filter purification efficiency changes.

The wind speeds Ooptimal at daytime and night can be obtained separately, even if the air purifier is used at the same room during the day and night. The air exchange rate may be different during night, when the door is closed and curtain is open. In addition, users or operators may have different trade-offs between the noise and target pollution concentration for his sleep than during daytime.

If the concentration $C_1$ is equal to or less than the concentration $C_0$ ($O_1$ not being zero), the outlet wind speed is more than necessary. The air purifier 10 can reduce its outlet wind speed to Olow=0.5*O1 (0.5 could be another pre-set value less than one by air purifier manufacture) and starts the test again until the increase of pollutant concentration is measured or the low limit of outlet wind speed Olow-limit is reached. Olow-limit could be another pre-set value by air purifier manufacture. If the increase of pollutant concentration is measured, the method 100 can be applied to calculate the wind speed Ooptimal. If Olow-limit is reached, Ooptimal= Olow-limit.

If releasing speed is equal to or less than zero in equation (3), which means the released harmful gas can be removed through the air exchange of that room, the smartphone could inform the customer to turn off the air purifier, or turn off the fan automatically.

The method 100 can automatically adjust the outlet wind speed of the air purifier 10 to an optimal speed at customers' place. At this optimal speed, the indoor air pollution can be maintained at a desired level, without inducing unnecessary noise. In this way, this optimal outlet wind speed at auto mode can be customized in that it is different for different customers with different room size and different harmful gas releasing speed. The optimal outlet wind speed can also be adaptive in that it changes with the change of pollution source. In addition, the optimal outlet wind speed can also be personalized in that it can be set by customer on smartphone by trade-off between indoor pollutant concentration and fan noise.

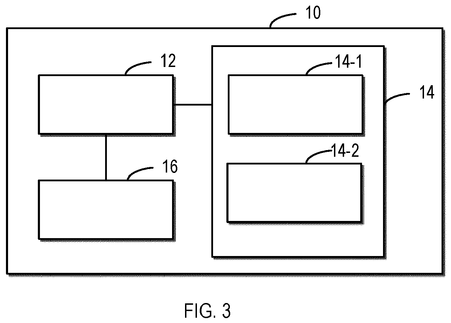

FIG. 3 is a block diagram illustrating an air purifier 10 in accordance with another embodiment of the present disclosure. In this embodiment, the detector 14 of the air purifier 10 may include a first sensor 14-1 configured to detect the concentration of a first pollutant and a second sensor 14-2 configured to detect a concentration of a second pollutant. The controller 12 can determine a respective target wind speed for the first and second pollutants. Both target wind speeds can be provided to the user for selection. Alternatively, a greater one of the target wind speeds can be identified as the wind speed to control the fan 16.

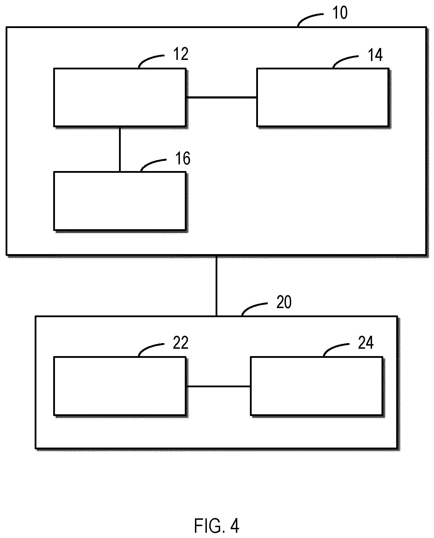

FIG. 4 is a block diagram illustrating an air purifier system in accordance with another embodiment of the present disclosure. The air purifier system includes an air purifier 10 similar to the one as shown in FIG. 1 or 3. Additionally, an electronic device 20 is coupled to the air purifier 10 and can be configured to implement at least a part of method 100. The electronic device 20 includes a processor 22 and a memory 24 coupled to the processor 22 and storing instructions thereon, the instructions, when executed by the processor 22, performing the method 100. The electronic device 20 can be implemented by a mobile phone, a smart speaker, cloud, and/or the like.

For example, the electronic device 20 can be coupled to the air purifier 10 via a wired and wireless connection. The concentration measured by the detector 14 can be transmitted to the electronic device 20, which determines the wind speed to operate the air purifier 10. The determined wind speed can be transmitted back to the controller 12 to control the fan 16. In this embodiment, the controller 12 can be implemented by a wind speed controller.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

By way of example, embodiments of the present disclosure can be described in the general context of machine-executable instructions, such as those included in program modules, being executed in a device on a target real or virtual processor. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of this disclosure, a machine readable medium may be any tangible medium that may contain, or store a program for use by or in connection with an instruction execution system, apparatus, or device. The machine readable medium may be a machine readable signal medium or a machine readable storage medium. A machine readable medium may include but not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in language specific to structural features and/or methodological acts, it is to be understood that the present disclosure defined in the appended claims is not necessarily limited to the specific features or acts described above. Rather, the specific features and acts described above are disclosed as example forms of implementing the claims.

**Claims**

1. A method of operating an air purifier in a room comprising:

   determining (102) a volume of the room;
   determining (104) a releasing speed of a pollutant in the room based on the volume of the room;
   obtaining (106) a target concentration of the pollutant in the room; and
   determining (108) a wind speed to operate the air purifier based on the releasing speed and the target concentration of the pollutant.

2. The method of claim 1, wherein determining the volume of the room comprises:

   operating the air purifier at a first wind speed for a first period of time to decrease a concentration of the pollutant; and
   determining the volume of the room based on a rate of decrease in the concentration of the pollutant, the first wind speed, and the first period of time.

3. The method of claim 2, wherein determining the volume of the room based on the rate of decrease in the concentration of the pollutant, the first wind speed, and the first period of time comprises:
   determining the volume V of the room by:

$$V = \frac{O_{max}T_1}{\ln(\frac{C_1}{C_0})},$$

   wherein $O_{max}$ represents that the first wind speed, $T_1$ represents the first period of time, and $C_1/C_0$ represents the rate of decrease in the concentration of the pollutant.

4. The method of any of claims 1 to 3, wherein determining the releasing speed of the pollutant comprises:

> operating the air purifier at a second wind speed for a second period of time, such that a concentration of the pollutant is increased from a first concentration to a second concentration; and
> determining the releasing speed of the pollutant based on the volume of the room, the first concentration, the second concentration, the second wind speed, and the second period of time.

5. The method of claim 4, wherein determining the releasing speed RS of the pollutant based on the volume V of the room, the first concentration C0, the second concentration C1, the second wind speed O1, and the second period of time T0 comprises:
   determining the releasing speed RS of the pollutant by:

$$RS = \frac{C_1 \cdot O_1 - C_0 \cdot O_1 \cdot e^{-\frac{O_1}{V} \cdot T_0}}{1 - e^{-\frac{O_1}{V} \cdot T_0}},$$

wherein V represents the volume of the room, Co represents the first concentration, $C_1$ represents the second concentration, $O_1$ represents the second wind speed, and To represents the second period of time.

6. The method of any of claims 1 to 3, wherein determining the releasing speed of the pollutant based on the volume of the room comprises:

> stopping a fan of the air purifier from running for a third period of time, such that a concentration of the pollutant is increased from a first concentration to a second concentration; and
> determining the releasing speed of the pollutant based on the volume of the room, the first concentration, the second concentration, and the second period of time.

7. The method of claim 6, wherein determining the releasing speed of the pollutant based on the volume of the room, the first concentration, the second concentration, and the second period of time comprises:
   determining the releasing speed RS of the pollutant by:

$$RS = \frac{V}{T_0} (C_1 - C_0),$$

wherein V represents the volume of the room, $C_0$ represents the first concentration, $C_1$ represents the second concentration, and $T_0$ represents the second period of time.

8. The method of any of claims 1 to 7, wherein determining the wind speed to operate the air purifier comprises: dividing the releasing speed by the target concentration of the pollutant to obtain the wind speed to operate the air purifier.

9. The method of any of claims 1 to 8, wherein the pollutant comprises at least one of formaldehyde, volatile organic compound (VOC), benzene, nitrogen dioxide, nitric oxide, acetaldehyde, sulphur dioxide, dichlorobenzene, acetone, and acetic acid.

10. The method of any of claims 1 to 9, further comprising:

> in response to a change of concentration of the pollutant exceeding a threshold, modifying the releasing speed of the pollutant in the room; and
> adapting the wind speed of the air purifier based on the modified releasing speed of the pollutant and the target concentration.

11. The method of any of claims 1 to 10, further comprising: periodically, modifying the releasing speed of the pollutant in the room; and
   adapting the wind speed of the air purifier based on the modified releasing speed of the pollutant and the target concentration.

**12.** The method of any of claims 1 to 11, wherein determining the wind speed to operate the air purifier comprises determining the wind speed during the daytime, and wherein the method further comprises:

determining a further releasing speed of the pollutant during night;
obtaining a further target concentration during night; and
determining a further wind speed of the air purifier based on the further releasing speed of the pollutant and the further target concentration.

**13.** An air purifier (10) comprising:

a controller (12) configured to perform the method of any of claims 1 to 12; and
a fan (16) coupled to the controller (12) and configured to output an air flow at the wind speed.

**14.** A computer program product stored on a computer storage medium and comprising machine-executable instructions, the machine-executable instructions, when executed by a device, causing the device to perform the method of any of claims 1 to 12.

**15.** An electronic device (20) comprising:

a processor (22); and
a memory (24) coupled to the processor (22) and storing instructions thereon, the instructions, when executed by the processor (22), performing the method of any of claims 1 to 12.

FIG. 1

100

102

104

106

108

FIG. 2

FIG. 3

FIG. 4

Europäisches
Patentamt

European
Patent Office

Office européen
des brevets

# EUROPEAN SEARCH REPORT

**Application Number**

EP 20 15 3994

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 109 268 944 A (GUANGDONG MIDEA REFRIGERATION EQUIPMENT CO LTD) 25 January 2019 (2019-01-25) * the whole document * ----- | 1-15 | INV. F24F3/16 F24F11/77 ADD. F24F110/65 |
| A | CN 105 757 909 B (JOYOUNG CO LTD) 29 March 2019 (2019-03-29) * paragraphs [0016] - [0030] * ----- | 1,14,15 | |
| A | WO 2019/213998 A1 (UNIV DALIAN TECH [CN]) 14 November 2019 (2019-11-14) * paragraphs [0021] - [0048]; claims 1-6 * ----- | 1,14,15 | |
| A | WO 2017/186606 A1 (KONINKLIJKE PHILIPS NV [NL]) 2 November 2017 (2017-11-02) * pages 6-15 * ----- | 1-3,14, 15 | |

**TECHNICAL FIELDS SEARCHED (IPC)**

F24F

The present search report has been drawn up for all claims

| Place of search | Date of completion of the search | Examiner |
|---|---|---|
| Munich | 15 July 2020 | Blot, Pierre-Edouard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 15 3994

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2020

| Patent document cited in search report | | Publication date | Patent family member(s) | | Publication date |
|---|---|---|---|---|---|
| CN 109268944 | A | 25-01-2019 | NONE | | |
| CN 105757909 | B | 29-03-2019 | NONE | | |
| WO 2019213998 | A1 | 14-11-2019 | CN | 108826488 A | 16-11-2018 |
| | | | WO | 2019213998 A1 | 14-11-2019 |
| WO 2017186606 | A1 | 02-11-2017 | CN | 107708748 A | 16-02-2018 |
| | | | EP | 3319647 A1 | 16-05-2018 |
| | | | JP | 6652661 B2 | 26-02-2020 |
| | | | JP | 2019514514 A | 06-06-2019 |
| | | | PL | 3319647 T3 | 31-01-2020 |
| | | | US | 2019117815 A1 | 25-04-2019 |
| | | | WO | 2017186606 A1 | 02-11-2017 |

EPO FORM P0459

For more details about this annex : see Official Journal of the European Patent Office, No. 12/82